# FASCICULE DE BREVET EUROPEEN

(11) **EP 0 605 318 B1**
(45) Date de publication et mention de la délivrance du brevet: **23.04.1997**
(21) Numéro de dépôt: 93403184.0
(22) Date de dépôt: 27.12.1993
(51) Int. Cl.: C04B 24/00, C04B 28/02

(54) **Composition de matière améliorant les propriétés rhéologiques de produits à base de ciments**
Zusammensetzung zum Verbessern der rheologischen Eigenschaften zementbasierter Produkte
Composition improving the rheological properties of products based on cement

(30) Priorité: 29.12.1992 FR 9215864
(43) Date de publication de la demande: 06.07.1994
(73) Titulaire: CFPI INDUSTRIES, 92233 Gennevilliers (FR)
(72) Inventeur: Schapira, Joseph, F-75015 Paris (FR); Cheminaud, Jean-Claude, F-95220 Herblay (FR); Gasse, Jean-Jacques, F-27600 Gaillon (FR); Hadzamann, Eric, F-60250 Mouy (FR); Bonnin, Joel, F-93200 Saint Denis (FR)
(74) Mandataire: Koch, Gustave

(56) Documents cités:
- EP-A- 0 177 308
- EP-A- 0 222 932
- EP-A- 0 326 125
- GB-A- 2 194 528
- GB-A- 2 240 334

## Description

L'invention a pour objet une composition de matières améliorant les propriétés rhéologiques des produits à base de ciments, à savoir les coulis ou laitiers, les bétons et les mortiers.

Elle vise également lesdits produits à base de ciments comportant la susdite composition de matières.

Elle vise enfin un procédé propre à améliorer les propriétés rhéologiques desdits produits à base de ciments.

Les produits à base de ciments, à savoir les coulis ou laitiers, les bétons et les mortiers sont généralement livrés sur site, prêts à l'emploi, avec des caractéristiques de maniabilité ou d'ouvrabilité correspondant à celles désirées par le maître d'oeuvre.

A cet égard, il est connu d'augmenter leur fluidité en leur faisant comporter des produits désignés par le terme de "superplastifiants"; ces superplastifiants améliorent leur ouvrabilité tout en permettant d'avoir recours à de plus faibles quantités d'eau au moment du gâchage.

L'ouvrabilité est mesurée par l'affaissement au cône d'Abrams (norme ASTM C 143-66) ou "mesure de slump".

Il se trouve que les superplastifiants actuellement utilisés perdent leur efficacité 30 à 60 minutes après leur incorporation au produit à base de ciment, cette durée variant en fonction de la nature du superplastifiant, des constituants du produit à base de ciment et des conditions climatiques de la mise en oeuvre de ces produits.

Cette perte d'efficacité, bien connue de l'homme de l'art, est exprimée couramment par ce qu'on appelle la "perte de slump" (voir par exemple les publications "Semento Gijutsu Nempo", 1983 (37) 163-6 et "Materials Structurals", 1989 (22) 128-107-11.

La perte de slump, rencontrée avec les superplastifiants de l'art antérieur, fait que l'addition dudit superplastifiant doit être confiée aux chauffeurs des camions-malaxeurs ou au personnel de chantier à l'arrivée du béton ou mortier sur le site d'utilisation; le personnel du chantier disposant alors de peu de temps pour le placement du béton, peut être amené à incorporer de l'eau afin de pouvoir achever un ouvrage.

Or, les additions d'eau font perdre la totalité du bénéfice de l'emploi des superplastifiants et provoquent toujours une réduction des performances mécaniques, de la résistance en compression du béton et de la durabilité des ouvrages.

Pour lutter contre la perte de slump, il a déjà été proposé d'ajouter au superplastifiant un retardateur de prise constitué par exemple par un acide hydroxycarboxylique ou ses sels; il se trouve toutefois que, dans ce cas, même si l'hydratation du ciment est retardée, il est difficile d'éviter une agrégation physique du béton confectionné; de plus, un dosage excessif en retardateur ne permet plus le décoffrage dans un délai satisfaisant et les résistances aux jeunes âges ne répondent pas aux normes en vigueur.

Il a également été proposé (brevet japonais Showa No. 139929/1979) d'utiliser des superplastifiants du type condensat formaldéhyde - sulfonate de béta-naphtalène sous forme granulée; il se trouve que, dans ce cas, la répartition du fluidifiant granulé dans le produit à base de ciment n'est pas homogène et on observe des zones de faiblesse dans les structures; ces zones de faiblesse sont dues localement à des quantités trop faibles ou à des surdosages en fluidifiant.

Il a également été proposé d'avoir recours à des fluidifiants à libération différée (ou "slow-release"); à ce titre, on a retenu:
- les copolymères d'anhydride maléique et de dérivés alkylène-polyalcoxylés (brevet Japon de la Société Showa No. 16851/85 et brevet France No. 81 13725),
- les copolymères d'oléfine et d'anhydride maléique tels que les résines isobam (brevet Japon de la Société Sanyo No. 63-233033 et brevet Japon de la Société Kao Corp. No. 62-83344),
- les copolymères d'esters acryliques et de vinylsulfonate (brevet Japon de la Société Takemoto Oils Fats No. 62-216950 et brevet européen de la Société Nippon Shokubai No. 291590),
- les copolymères de styrène et d'anhydride maléique (brevet Japon de la Société Idemitsu No. 01-246166) et
- les copolymères d'indène et d'anhydride maléique (brevet PCT/W090/12642 de la Société Kawasaki Steel),
- les émulsions d'acrylates d'éthyle (brevet Japon de la Société Japan Synthetic Rubber Co. No. 58-158560),
- les sulfates et phosphates de poly(vinylalcools) (brevet Japon de la Société Kajima Corp. Daïchi No. 61-83659 et No. 61-83661).

Ces produits du type "slow-release" sont généralement préconisés en association avec les superplastifiants du type condensats de naphtalènesulfonate et de formol (PNS) et mélamine sulfitées; mais s'ils atténuent parfois la perte de slump, ce résultat est toujours accompagné d'un effet entraîneur d'air excessif et souvent d'un retard de prise rédhibitoire. De plus, en raison de leur structure chimique initiale dans laquelle les groupes carboxyliques sont en partie ou totalement estérifiés, ils sont peu ou faiblement solubles dans l'eau et, au contact du ciment, le polymère ou copolymère précipite. Cette difficulté de mise en oeuvre, le manque de stabilité au stockage en solution aqueuse ainsi que le prix souvent prohibitif ont limité le développement des produits "slow-release".

Enfin, le document EP-A-326 125 décrit un agent améliorant l'écoulement, destiné à des compositions contenant du ciment, de la chaux et/ou du gypse, cet agent étant à base d'un agent superplastifiant et d'un agent chélatant.

L'invention a pour but, surtout, de remédier aux inconvénients de l'état antérieur de la technique et de fournir une composition de matières améliorant les propriétés rhéologiques des produits à base de ciments qui puisse être incorporée à ces produits au moment de leur préparation, notamment au niveau de la centrale de préparation du béton, et qui reste efficace pendant une durée au moins égale à celle du transport depuis la centrale de fabrication jusqu'au site d'utilisation augmentée de celle de la mise en place du produit sur le site d'utilisation, cette composition étant par conséquent propre à augmenter la durée d'ouvrabilité des bétons prêts à l'emploi.

Et il est du mérite de la Société Demanderesse d'avoir trouvé que, de façon surprenante et inattendue, il devient possible
- non seulement d'accroître considérablement et de maintenir pendant une durée au moins égale à celle dont il a été question ci-dessus, les propriétés rhéologiques des produits à base de ciment, autrement dit à augmenter la durée d'ouvrabilité des bétons prêts à l'emploi,
- mais, de plus, de ne pas retarder excessivement la prise desdits produits et de ne pas affecter les délais de décoffrage ainsi que les performances mécaniques des ouvrages construits à l'aide desdits produits,
dès lors que l'on a recours, à titre de compositions améliorant les propriétés rhéologiques des produits à base de ciments, à un mélange ternaire comprenant:
- un agent superplastifiant ou réducteur d'eau à effet dispersant,
- un agent stabilisant susceptible de former un chélate avec les ions calcium du produit à base de ciment, et
- un agent dispersant polycarboxylique polymère.

L'effet synergique du susdit mélange ternaire vis-à-vis de la perte de slump est sans commune mesure avec les résultats pouvant être obtenus par toute association binaire des trois constituants.

De plus, lesdits mélanges permettent de conférer aux produits à base de ciments une ouvrabilité suffisante pour permettre leur pompage et/ou leur placement pendant au moins 2 heures après leur confection, sans influer défavorablement sur le délai de démoulage et sans affecter les résistances mécaniques des ouvrages construits aussi bien après 1 jour qu'après 7 et 28 jours.

La composition conforme à l'invention améliorant les propriétés rhéologiques des produits du genre en question est caractérisée par le fait que
- l'agent superplastifiant ou réducteur d'eau est choisi parmi:
   . les condensats de naphtalène-sulfonate et de formol (PNS) sous la forme de sels de métaux alcalins, alcalino-terreux, d'ammonium, d'amines et d'alcanol-amines,
   . les mélamines sulfitées et les mélamines modifiées, les condensats de mélamine, de dérivés sulfités et de formol sous la forme des sels alcalins et alcalino-terreux,
   . les lignosulfonates éventuellement purifiés,
   . les sulfonates de polystyrène et les copolymères de polystyrène sulfonés et d'anhydride maléique et
   . les mélanges des susdits produits;
- l'agent stabilisant propre à fournir un chélate stable avec les ions calcium du produit à base de ciment est choisi parmi:
   . les acides hydroxycarboxyliques et leurs sels, plus particulièrement ceux du groupe comprenant les acides salicylique, citrique, lactique, gluconique, glucoheptanoïque, tartrique et muconique,
   . les aldoses et cétoses, plus particulièrement le saccharose et les sirops de maïs,
   . les complexants minéraux, plus particulièrement les phosphates, les borates et les polyphosphates,
   . les complexants organiques choisis plus particulièrement dans le groupe comprenant l'EDTA, le NTA,
   . les antioxydants, plus particulièrement ceux du groupe comprenant les acides ascorbique et isoascorbique et,
   . de préférence, les dérivés de l'acide phosphonique de structure polymère qui contiennent des groupes hydroxy et/ou amino et/ou carboxylates, ainsi qu'un ou plusieurs groupes méthylène phosphonique;
- l'agent dispersant polycarboxylique est choisi dans le groupe de produits comprenant les homopolymères et les copolymères hydrosolubles des acides carboxyliques éthyléniques et leurs sels alcalins, ces polymères résultant de la polymérisation ou copolymérisation des acides éthyléniques choisis dans le groupe comprenant les acides acrylique, méthacrylique, fumarique, maléique, itaconique, crotonique, aconitique, sinapique, mésaconique, undécylénique, angélique, hydroxy-acrylique ainsi que l'anhydride maléique.

Selon un mode de réalisation avantageux de la composition conforme à l'invention, l'agent stabilisant, dans la mesure où il est constitué par un dérivé de l'acide phosphonique de structure polymère et où il contient des groupes hydroxy et/ou amino et/ou carboxylates, et un ou plusieurs groupes méthylène phosphonique, est un composé polymère de formule générale: 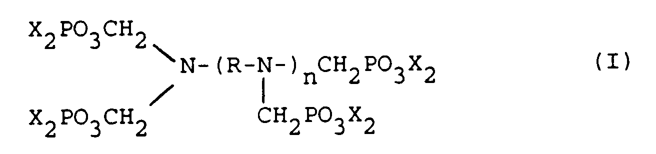 dans laquelle:
- n est un nombre entier de 0 à 10, de préférence de 0 à 4,
- R représente une chaîne carbonée de structure alkylène ou alkylène oxyde de formules:

   (R₁ - O -R₂)

   ou 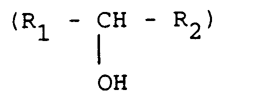
dans lesquelles
- R₁ et R₂ sont des groupes alkyle comprenant au moins deux atomes de carbone,
- X représente un atome d'hydrogène, un métal alcalin ou alcalino-terreux, l'ammonium, une amine protonée ou une alcanolamine protonée.

Les composés polymères modifiés de formule (I) peuvent être obtenus par addition de formaldéhyde et d'acide orthophosphoreux sur les polymères résultant de l'addition d'ammoniaque sur une oléfine, une oxyoléfine ou sur l'épichlorhydrine ou l'un de ses dérivés.

A titre d'exemples de composés préférés de formule (I), on peut citer:
- l'acide aminotri(méthylène-phosphonique) et ses sels,
- l'acide éthylènediamine-tétra(méthylène-phosphonique) et ses sels,
- l'acide diéthylènetriamine-penta(méthylène-phosphonique) et ses sels,
- l'acide hexaméthylènediamine-tétra (méthylène-phosphonique) et ses sels.

Ces produits sont commercialisés en particulier par la Société Monsanto Co. sous la marque "DEQUEST".

Selon un autre mode de réalisation avantageux de la composition conforme à l'invention, l'agent stabilisant, dans la mesure où il est constitué par un dérivé de l'acide phosphonique de structure polymère et où il contient des groupes hydroxy et/ou amino et/ou carboxylates, et un ou plusieurs groupes méthylène phosphonique, est un polymère obtenu en modifiant des condensats urée-formaldéhyde par addition de formaldéhyde et d'acide orthophosphoreux, ledit polymère étant représenté par la formule générale: 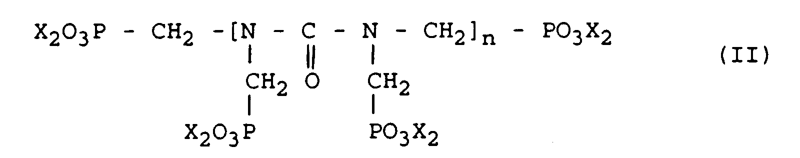 dans laquelle:
- n est un nombre entier égal ou supérieur à 1,
- X représente un atome d'hydrogène, un métal alcalin ou alcalino-terreux, l'ammonium, une amine protonée ou une alcanolamine protonée.

Selon un autre mode de réalisation avantageux de la composition conforme à l'invention, l'agent stabilisant, dans la mesure où il est constitué par un dérivé de l'acide phosphonique de structure polymère et où il contient des groupes hydroxy et/ou amino et/ou carboxylates, et un ou plusieurs groupes méthylène phosphonique, est un composé gem-hydroxyphosphonique de formule générale: 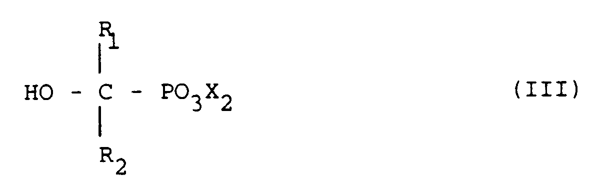 dans laquelle:
- R₁ représente un atome d'hydrogène ou un groupe alkyle,
- R₂ représente un atome d'hydrogène, un groupe alkyle ou le groupe PO₃X₂,
- X représente un atome d'hydrogène, un métal alcalin ou alcalino-terreux, l'ammonium, une amine protonée ou une alcanolamine protonée.

Les composés de formule (III) peuvent être obtenus par addition d'acide orthophosphoreux sur un aldéhyde ou une cétone.

A titre de composés avantageux de formule (III), on peut citer l'acide 1-hydroxyéthylidène-1,1-diphosphonique et ses sels.

Selon un autre mode de réalisation avantageux de la composition conforme à l'invention, l'agent stabilisant, dans la mesure où il est constitué par un dérivé de l'acide phosphonique de structure polymère et où il contient des groupes hydroxy et/ou amino et/ou carboxylates, et un ou plusieurs groupes méthylène phosphonique, est un composé de formule générale: 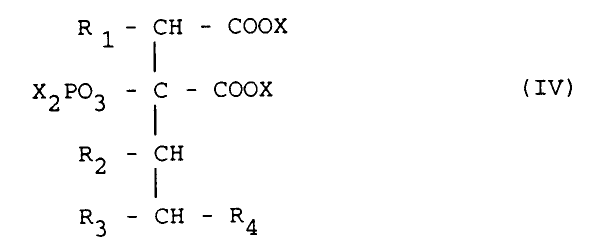 dans laquelle:
- R₁ et R₃ représentent un atome d'hydrogène ou un groupe alkyle comprenant de 1 à 4 atomes de carbone,
- R₂ représente un atome d'hydrogène, un groupe alkyle ou carboxyalkyle,
- R₄ représente un groupe carboxyalkyle, carboxamido ou cyano et
- X représente un atome d'hydrogène, un métal alcalin ou alcalino-terreux, l'ammonium, une amine protonée ou une alcanolamine protonée.

Les agents stabilisants de formule (IV) peuvent être préparés par mise en oeuvre de techniques conventionnelles; ainsi, on peut les préparer par réaction de composés éthyléniques activés par un substituant attracteur d'électrons, comme les groupes nitrile, carbonyle, carboxyle ou carboxamido avec un ester d'acide phosphonoalkylsuccinique; cette réaction est catalysée par les bases fortes, comme par exemple les alkylates de métaux alcalins; le produit d'addition est ensuite saponifié par chauffage en présence d'acides forts, tels que par exemple l'acide chlorhydrique.

Les susdits esters phosphono-alkylsucciniques peuvent être obtenus par les techniques de synthèse conventionnelles telles que, par exemple, les additions de diesters d'acide phosphoreux sur les diesters de l'acide maléique.

Pour plus de détails relatifs à la préparation des composés de formule (IV), on peut se reporter au brevet français No. 71 45264.

A titre de composés avantageux de formule (IV), on peut citer les dérivés de l'acide 2-phosphono-butane-1,2-dicarboxylique, plus particulièrement ceux commercialisés par la Société Bayer sous la marque "BAYHIBIT", comme par exemple l'acide 2-phosphono-butane-1,2,4-tricarboxylique et ses sels alcalins, alcalino-terreux, d'ammonium, d'amine protonée ou d'alcanolamine protonée.

Selon un autre mode de réalisation avantageux de la composition conforme à l'invention, l'agent dispersant polycarboxylique présente un poids moléculaire moyen de 500 à 15000 en nombre, de préférence de 500 à 10000 en nombre et, plus préférentiellement encore, de 800 à 3500 en nombre, déterminé par chromatographie de perméation de gel (CPG).

Pour préparer le susdit agent dispersant polycarboxylique, on peut avoir recours à des procédés de polymérisation conventionnels; les polymérisations en question peuvent être effectuées au sein d'un solvant des monomères retenus qui sont généralement hydrosolubles; la polymérisation est conduite en milieu aqueux ou préférentiellement en milieu hydroalcoolique; on utilise alors des alcools légers (nombre d'atomes de carbone de 1 à 4) et préférentiellement l'isopropanol, bien que, dans ce cas, le procédé soit moins économique car il entraîne la nécessité d'une élimination de l'alcool, généralement par distillation; on préfère néanmoins utiliser un milieu hydroalcoolique car, contrairement à ce qui se passe au sein d'un milieu aqueux, la polymérisation y est mieux contrôlée et conduit à des masses moléculaires généralement plus faibles.

La polymérisation est amorcée à l'aide d'un initiateur hydrosoluble tel que l'eau oxygénée, les persulfates d'ammonium, de potassium et les sulfates; un réducteur tel que le bisulfite de sodium est utilisé comme accélérateur en combinaison avec l'initiateur.

Lorsqu'on travaille en milieu hydroalcoolique, on utilise les peroxydes tels que les peroxydes de benzoyle, de lauryle ou de cumène, et également les composés azo tels que l'azo-bis-isobutyronitrile.

Les quantités d'initiateur mises en oeuvre sont très faibles, de l'ordre de 0,1 à 10% en poids par rapport au poids des monomères.

La polymérisation est préférentiellement conduite à une température comprise entre 30 et 100°C.

Le polymérisat obtenu est neutralisé jusqu'à un pH de 7 à 8 par une base pouvant être choisie parmi les hydroxydes alcalins ou alcalino-terreux, les oxydes, les carbonates, l'ammoniaque, les sels d'amines protonées.

Lorsque la réaction a été conduite en milieu hydroalcoolique, l'alcool est ensuite éliminé par distillation.

Les polymères ainsi obtenus ont généralement une masse moléculaire comprise entre 500 et 20000 en nombre, déterminée par CPG.

Les agents dispersants polycarboxyliques propres à être mis en oeuvre pour former la composition conforme à l'invention, se trouvent dans le commerce; ils présentent en plus de leur bon pouvoir dispersant vis-à-vis des constituants minéraux des produits à base de ciments, un très bon pouvoir séquestrant du calcium.

Ces deux propriétés associées à l'excellent pouvoir dispersant de l'agent superplastifiant et à l'effet stabilisant des susdits polymères et dérivés phosphoniques font que la composition conforme à l'invention confère aux produits à base de ciments des propriétés en terme d'exploitabilité très performantes et durables dans le temps sans affecter les résistances à tous âges des ouvrages obtenus à l'aide de ces produits.

Selon un mode de réalisation avantageux, la composition conforme à l'invention comporte:
- de 5 à 95%, de préférence de 50 à 95% en poids d'au moins un agent superplastifiant notamment choisi dans le groupe comprenant les condensats formaldéhyde-naphtalènesulfonate de métaux alcalins ou alcalino-terreux, les lignosulfonates de métaux alcalins ou alcalino-terreux, les mélamines sulfitées, les polystyrènesulfonates de métaux alcalins ou alcalino-terreux et les copolymères styrène-anhydride maléique sous la forme de leurs sels de métaux alcalins ou alcalino-terreux,
- de 0,1 à 50%, de préférence de 0,1 à 25% en poids d'au moins un agent stabilisant chélatant des ions calcium notamment choisi dans le groupe comprenant les acides ou sels de polyalkylène-polyamino(méthylènephosphonique), les condensats urée-formaldéhyde modifiés par addition de groupes méthylènephosphoniques, les composés gemhydroxyphosphoniques et les dérivés de l'acide 2-phosphono-butane-1,2-dicarboxylique, et
- de 5 à 95%, de préférence de 5 à 80% en poids d'un agent dispersant polycarboxylique polymère notamment constitué par un polycarboxylate de métal alcalin.

Selon un autre mode de réalisation avantageux, la composition conforme à l'invention comprend
- de 5 à 40% en poids d'un polycarboxylate de métal alcalin,
- de 0,1 à 20% en poids d'un agent stabilisant chélatant du calcium constitué par un acide polyalkylène-polyamino(méthylènephosphonique) ou ses sels ou un dérivé de l'acide 2-phosphono-butane-1,2-dicarboxylique et, plus particulièrement, l'acide 2-phosphono-butane-1,2,4-tricarboxylique et ses sels,
le complément à 100% en poids de la composition étant constitué par un agent superplastifiant, de préférence un condensat de formaldéhyde-naphtalènesulfonate de métal alcalin.

La composition conforme à l'invention peut se présenter et être commercialisée sous la forme d'une solution aqueuse légèrement alcaline de pH 7 à 8, à 40% en poids de matières sèches. Elle peut être utilisée simultanément avec les superplastifiants de l'art antérieur. Au moment de sa mise en oeuvre, elle doit être uniformément homogénéisée avec les autres constituants du produit à base de ciment.

La composition conforme à l'invention peut également se présenter et être commercialisée sous la forme d'une poudre notamment atomisée; elle peut être utilisée sous cette forme lors de la fabrication de produits à base de ciments prêts à l'emploi mais conservés à l'état sec; elle est alors introduite dans le mélangeur de fabrication qui reçoit les autres constituants du produit à base de ciment.

Lorsqu'il s'agit de préparer les bétons ou mortiers à l'état humide, il est préférable d'introduire la composition conforme à l'invention sous forme d'une solution aqueuse, et ce après humidification et imprégnation du béton ou mortier par l'eau de gâchage.

La composition conforme à l'invention est incorporée au ciment à raison de 0,1 à 1,0% en poids de matière sèche par rapport au ciment. La quantité exacte de composition est déterminée en fonction de la composition spécifique du ciment et en fonction du dosage en eau, de la nature des granulats et de la distribution granulométrique du produit à base de ciment.

La composition conforme à l'invention peut être utilisée en tant que superplastifiant d'un produit à base de ciment par incorporation au moment de la préparation, tout en maintenant un dosage invariable en eau; elle peut également être utilisée comme réducteur d'eau d'un produit à base de ciment notamment pour la préparation des bétons à hautes et à très hautes performances, et permet alors de faire en sorte que la maniabilité (mesurée par affaissement) reste invariable par rapport à une composition témoin; elle peut également être utilisée dans les forages pétroliers en tant qu'agent rhéologique de coulis de cémentation.

La composition conforme à l'invention améliore la fluidification des produits à base de ciments, à savoir les mortiers et bétons, les laitiers et coulis; elle permet par ailleurs de maintenir la rhéologie de ces produits dans le temps sans retarder de façon excessive la prise ni influer négativement sur les résistances à toutes les périodes et particulièrement aux jeunes âges.

La composition conforme à l'invention permet donc à l'exploitant de véhiculer, travailler et placer les produits à base de ciments 2 heures après leur confection sans différer les échéances de démoulage et décoffrage des ouvrages, ni affecter les résistances à tous âges desdits ouvrages; de plus, ces performances sont atteintes sans provoquer d'entraînement d'air occlus.

Les produits à base de ciments, à savoir les coulis ou laitiers, les bétons et les mortiers conformes à l'invention sont caractérisés par le fait qu'ils comportent une quantité efficace de la composition conforme à l'invention, étant entendu que par "quantité efficace" on désigne celle par laquelle il est possible de conférer aux produits à base de ciments, les propriétés rhéologiques recherchées; suivant un mode de réalisation avantageux, la quantité efficace représente une proportion de 0,1 à 1,0% en poids de matière sèche par rapport au ciment.

Le procédé conforme à l'invention est caractérisé par le fait que l'on fait comporter à un produit à base de ciment une quantité efficace, avantageusement de 0,1 à 1,0% en poids de matière sèche par rapport au ciment
- soit de la composition conforme à l'invention,
- soit des constituants de cette composition, lesdits constituants étant alors incorporés audit produit à base de ciment en des proportions relatives correspondant à celles qui sont les leurs dans ladite composition.

L'invention sera encore mieux comprise à l'aide des exemples non limitatifs qui suivent et dans lesquels sont illustrés des modes de réalisation avantageux de l'invention; les pourcentages et les indications en parties sont exprimés en poids.

Dans ces exemples, on a
- démontré la synergie obtenue quand les trois constituants de la composition conforme à l'invention sont utilisés (exemple 1),
- étudié l'influence de la nature de chacun des constituants de la composition en faisant successivement varier l'agent dispersant polymère carboxylique (exemple 2), l'agent stabilisant (exemple 3), l'agent superplastifiant (exemple 4),
- étudié l'influence des proportions de chacun des trois constituants de la composition (exemple 5),
- étudié les propriétés de réduction d'eau de la composition conforme à l'invention (exemple 6).

### EXEMPLE 1

### Démonstration de l'existence d'une synergie

On a tout d'abord préparé différents échantillons d'environ 30 litres chacun de béton normal plastique conformes à la norme AFNOR P 18 351 en procédant selon le protocole défini par la norme AFNOR P 18 404.

Pour ce faire, on a introduit dans un malaxeur à axe vertical de 75 litres utiles, d'abord les gros granulats (975 kg/m³ de béton), puis un ciment (350 kg/m³) et enfin les granulats fins (825 kg/m³).

On a malaxé à sec pendant 1 minute.

On a ajouté ensuite l'eau de gâchage (182 kg/m³, le rapport eau/ciment étant donc de 0,52) en 30 secondes tout en malaxant.

Le malaxage a été poursuivi durant 2 minutes et 30 secondes.

Le ciment utilisé était celui commercialisé par la Société Lafarge sous la marque CPA HP 55. L'eau utilisée était de l'eau de ville. Les granulats utilisés étaient des granulats du Loing concassés mélangés à du sable de Seine; les distributions granulométriques étaient comme suit:

| | |
|---|---|
| 0/0,5 mm | 140 kg/m³ |
| 0/1 mm | 455 kg/m³ |
| 1/4 mm | 230 kg/m³ |
| 4/10 mm | 245 kg/m³ |
| 10/20 mm | 730 kg/m³. |

Pour l'échantillon témoin exempt d'adjuvant, le malaxage a été arrêté après 2 minutes et 30 secondes.

Dans le cas des échantillons de béton comportant un adjuvant et notamment la composition conforme à l'invention, on a introduit rapidement l'adjuvant et notamment la composition sous forme de solutions aqueuses à 40% d'extrait sec; le malaxage a été poursuivi ensuite durant une minute supplémentaire.

Les échantillons de béton, adjuvantés ou non, ont été soumis aux mesures d'affaissement au cône d'Abrams (selon la norme ASTM C 143-66) à âge "0"; ensuite, les échantillons ont été laissés au repos, puis malaxés à nouveau pendant 30 secondes juste avant de procéder aux mesures d'affaissement aux âges de 60 et 120 minutes.

A partir des échantillons d'âge "0", on a confectionné des prismes dont les dimensions étaient de 7 cm x 7 cm x 28 cm; ces prismes ont été stockés en chambre climatique (20°C ±1°C; humidité relative 90 ±5%).

On a mesuré ensuite les résistances en compression Rc après 24 heures et on a fait le rapport de Rc avec la valeur trouvée pour le témoin, c'est-à-dire Rct.

Pour illustrer la synergie obtenue en utilisant simultanément les trois constituants de la composition conforme à l'invention, on a procédé aux cinq essais comparatifs 1 à 5 explicités ci-après et à l'essai d'une composition conforme à l'invention.

L'essai comparatif 1 a consisté à tester un échantillon de béton non adjuvanté (témoin).

L'essai comparatif 2 a consisté à tester un échantillon de béton comportant 0,224% en sec par rapport au ciment d'un agent superplastifiant A constitué par du naphtalène-sulfonate formaldéhyde sel de sodium, à savoir celui commercialisé par la Société Demanderesse sous la marque GALORYL LH 120.

L'essai comparatif 3 a consisté à tester un échantillon de béton comportant respectivement 0,224% et 0,064% en sec par rapport au ciment de l'agent superplastifiant A selon l'essai comparatif 2 et d'un agent polycarboxylique polymère B constitué par le polyacrylate de sodium de masse moléculaire en nombre de 1800, à savoir celui commercialisé par la Société Coatex sous la désignation 18-43 SC.

L'essai comparatif 4 a consisté à tester un échantillon de béton comportant respectivement 0,224% et 0,042% en sec par rapport au ciment de l'agent superplastifiant A selon l'essai comparatif 2 et de l'agent stabilisant chélatant C constitué par le sel tétrasodique de l'acide 2-phosphono-butane-1,2, 4-tricarboxylique.

L'essai comparatif 5 a consisté à tester un échantillon de béton comportant respectivement 0,064% et 0,042% en sec par rapport au ciment de l'agent dispersant polycarboxylique polymère B selon l'essai comparatif 3 et de l'agent stabilisant chélatant C selon l'essai comparatif 4.

L'essai de la composition conforme à l'invention a consisté à tester un échantillon de béton comportant respectivement 0,224, 0,064 et 0,042% en sec par rapport au ciment de l'agent superplastifiant A selon l'essai comparatif 2, de l'agent dispersant polycarboxylique polymère B selon l'essai comparatif 3 et de l'agent stabilisant chélatant C selon l'essai comparatif 4.

Les résultats obtenus dans les susdits essais ont été réunis dans le Tableau I.

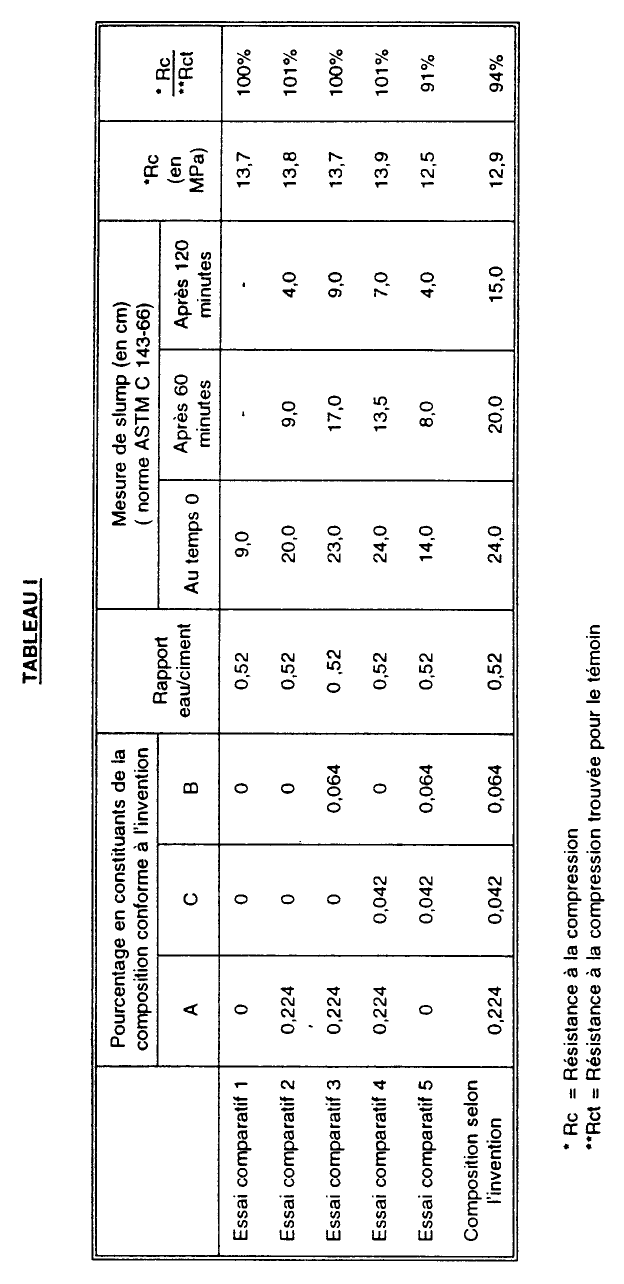

A l'examen des résultats réunis dans le Tableau I, l'effet synergique obtenu en utilisant simultanément les trois constituants de la composition conforme à l'invention, apparaît clairement.

Cet effet synergique est tout à fait inattendu et l'examen des résultats des essais 2, 3, 4 et 5 permet de vérifier que les performances de la composition conforme à l'invention sont bien supérieures aux performances de toute association binaire de ses constituants pris deux à deux et à la somme des performances de chacun de ces constituants.

La composition conforme à l'invention impartit au béton plastique une ouvrabilité exceptionnelle pendant une durée de deux heures après sa préparation sans affecter les résistances mécaniques au jeune âge; ladite composition satisfait aussi à la norme AFNOR 18 333 qui concerne les adjuvants superplastifiants et qui exige de la part d'un béton comportant un superplastifiant, une résistance en compression à 24 heures supérieure ou égale à 85% de celle d'un béton témoin exempt de superplastifiant pour le même rapport eau/ciment.

La composition conforme à l'invention est tout particulièrement appropriée pour toute application dans laquelle il y a un délai entre le moment de la préparation et celui du placement final du béton. Elle convient en particulier à la mise en oeuvre en centrale à béton, cas dans lequel un délai d'au plus 2 heures peut être souhaité pour couvrir le transport par camion-malaxeur jusqu'au site de placement; elle peut aussi convenir pour le pompage de tout produit à base de ciment.

### EXEMPLE 2

### Etude de l'influence de la nature de l'agent dispersant polycarboxylique polymère.

On a préparé des échantillons de béton selon le protocole de l'exemple 1 et on leur a fait comporter une proportion de 0,8% de plusieurs compositions conformes à l'invention à 40% d'extrait sec différant l'une de l'autre par la nature de l'agent dispersant polycarboxylique polymère.

La constitution des compositions conformes à l'invention était de:
67,8% en sec de l'agent superplastifiant A selon l'exemple 1
12,8% en sec de l'agent stabilisant chélatant C selon l'exemple 1
19,4% en sec d'un agent dispersant polycarboxylique polymère.

Différents agents polycarboxyliques polymères constitués par des polycarboxylates de sodium, produits commerciaux de masses moléculaires en nombres variables (déterminées par chromatographie de perméation de gel et désignées par Mn) ont été employés; il s'agit des produits suivants:
- Polyacrylate de sodium (Mn 800) de la Société Coatex ou NaPAA (1)
- Polyacrylate de sodium (Mn 1800) de la Société Coatex ou NaPAA (2)
- Polyacrylate de sodium (Mn 2700) de la Société Norsohaas ou NaPAA (3)
- Polyacrylate de sodium (Mn 5000) de la Société Coatex ou NaPAA (4)
- Polyacrylate de sodium commercialisé par Rohm & Haas sous la marque "Tamol 983" ou NaPAA (5)
- Polyacrylate de sodium commercialisé par Rohm & Haas sous la marque "Tamol 960" ou NaPAA (6)
- Polyacrylate de sodium (Mn 750) de la Société Norsohaas ou NaPAA (7)
- Polyacrylate de sodium (Mn 1400) de la Société Norsohaas ou NaPAA (8)
- Polyacrylate de sodium (Mn 750) de la Société Coatex ou NaPAA (9)
- Polyacrylate de sodium préparé par le procédé désigné par Synthèse S1 ou NaPAA (10)
- Copolymère d'oléfine et d'acides carboxyliques préparé par le procédé désigné par Synthèse S2 ou COPO (11).

### Synthèse S1

Dans un ballon de 1 litre, équipé d'un agitateur et d'un condenseur à reflux inerté sous azote, on a chargé 80 g de cyclohexanone et 6,5 g d'acide acrylique. On a chauffé à 105-110°C, puis on a coulé simultanément en 1 heure une solution de 2,6 g de peroxyde de benzoyle dans 30 g de cyclohexanone et 58,3 g d'acide acrylique. Après l'addition complète des réactifs, la polymérisation a été poursuivie durant 3 heures à 115-120°C. On a refroidi à 90°C, puis on a ajouté 60 g de cyclohexanone; on a neutralisé avec 120 g de soude à 30% et dilué avec 200 g d'eau. On a décanté et la phase aqueuse a été distillée afin d'éliminer totalement la cyclohexanone. On a obtenu une solution polymère acrylique d'extrait sec 26,3% de NaPAA (10) de viscosité Ubbelhode à 25°C en solution à 25% de 13,6 mPa.s⁻¹.

### Synthèse S2

Dans un ballon tricol de 1 litre, équipé d'un agitateur et d'un condenseur à reflux inerté sous azote, on a chargé 80 g de cyclohexanone, 33,6 g de diisobutylène (mélange de 2,4,4-triméthylpentène-1 et de 2,4,4-triméthylpentène-2) et 14,7 g d'anhydride maléique. On a chauffé à 105-110°C, puis on a introduit simultanément en 1 heure, une solution de 3,2 g de peroxyde de benzoyle dans 30 g de cyclohexanone et 32,4 g d'acide acrylique. La polymérisation a été poursuivie durant 4 heures à 115-120°C, puis on a refroidi à 90°C, dilué avec 60 g de cyclohexanone et 250 g d'eau. On a neutralisé le polymère avec 100 g de soude à 30% On a décanté et on a repris la phase aqueuse afin d'éliminer le solvant de réaction par distillation. On a obtenu une solution polymère à 26% d'extrait sec de COPO (11).

Comme à l'exemple 1, on a effectué les mesures d'affaissement au cône d'Abrams (selon la norme ASTM C 143-66).

On a également mesuré la résistance à la compression Rc après 24 heures et on a fait le rapport de la valeur trouvée à celle, Rct, trouvée pour le témoin.

Les résultats de sept expériences [Expérience témoin à Expérience 6] obtenus avec le témoin et les six agents dispersants polycarboxyliques polymères NaPAA (1) à NaPAA (6), sont réunis dans le Tableau II.

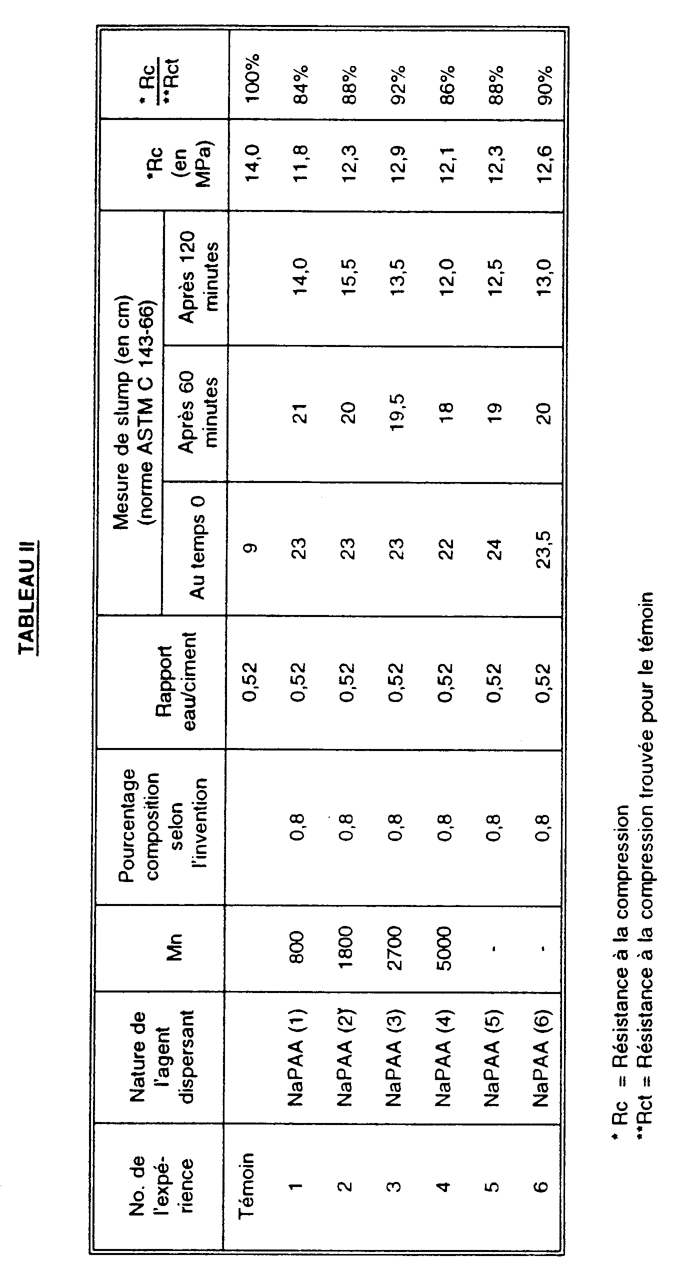

L'examen des résultats réunis dans le Tableau II montre que les agents dispersants polymères acryliques et carboxyliques de masses moléculaires en nombres compris entre 800 et 5000 sont acceptables comme constituants de la composition conforme à l'invention; de préférence, on retient toutefois les agents dispersants en question ayant une masse moléculaire en nombres compris entre 1500 et 3500.

Les agents dispersants polymères acryliques courts ont un effet retardateur de prise plus prononcé, encore sensible sur les résistances en compression au jeune âge et les polymères acryliques longs ont un effet dispersant sensiblement inférieur, mesurable dès l'affaissement initial.

De plus, et toujours pour montrer l'influence de la nature de l'agent dispersant polymère polycarboxylique, on a réalisé une série de mesures d'affaissement et d'air occlus (selon norme ASTM C 231) sur des échantillons de béton adjuvantés à l'aide d'une composition constituée comme suit:
68,3% en sec/sec total de l'agent superplastifiant A selon l'exemple 1
9,7% en sec/sec total de l'agent stabilisant chélatant C selon l'exemple 1
22,0% en sec/sec total d'un agent dispersant polymère carboxylique.

On a d'abord réalisé trois essais comparatifs avec des agents dispersants polymères acryliques ne faisant pas partie de ceux retenus conformément à l'invention.

Dans un essai comparatif 1, on a utilisé un agent dispersant polyacrylique de faible masse moléculaire en nombre (750), à savoir le NaPAA (7).

Dans un essai comparatif 2, on a utilisé un agent dispersant polyacrylique de forte masse moléculaire en nombre (7500), à savoir le NaPAA (9).

Dans un essai comparatif 3, on a utilisé le terpolymère synthétique désigné par COPO (11).

On a procédé ensuite à quatre autres essais désignés par "Essai-Invention 1" à "Essai-Invention 4", dans lesquels l'agent dispersant polycarboxylique polymère fait partie de ceux retenus conformément à l'invention.

Il s'agissait des produits NaPAA (8), NaPAA (5), NaPAA (6) et NaPAA (10) identifiés plus haut.

Les résultats des mesures de slump et d'air occlus sont réunis dans le Tableau III.

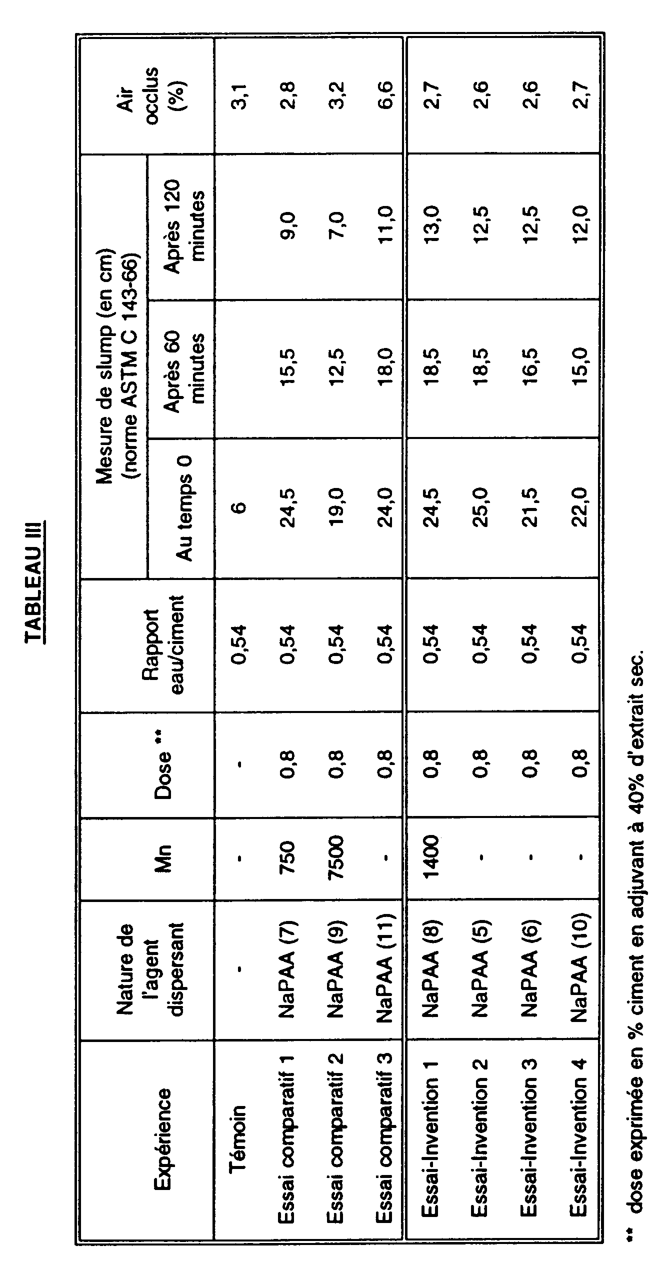

L'examen des résultats du Tableau III révèle que les agents dispersants constitués par des polyacrylates de masse moléculaire inférieure à 800 ou supérieure à 5000 conduisent à des performances inférieures dans le temps à celles obtenues avec les agents dispersants polycarboxyliques polymères faisant partie de ceux retenus par l'invention, en particulier concernant les performances enregistrées 2 heures après la préparation des bétons.

L'essai comparatif 3 révèle que, contrairement aux agents dispersants comprenant des copolymères oléfine-acide carboxylique sous forme de sel, les agents dispersants faisant partie de ceux conformes à l'invention et constitués à partir d'homopolymères ou copolymères d'acides carboxyliques sous forme de sels, ne montrent pas d'effet entraîneur d'air par rapport au témoin.

La composition conforme à l'invention conduit donc à une fluidification accrue dans le temps sans provoquer d'entraînement d'air, ce qui permet d'incorporer, au moment de la formulation, des agents entraîneurs d'air destinés exclusivement à cet effet.

### EXEMPLE 3

### Etude de l'influence de la nature de l'agent stabilisant chélatant.

On a préparé des échantillons de béton normal plastique selon le protocole décrit à l'exemple 1 et on leur a fait comporter la composition conforme à l'invention présentée sous forme d'une solution aqueuse à 40% de matière sèche, cette composition comprenant:
70% en sec/sec total de l'agent superplastifiant A selon l'exemple 1
20% en sec/sec total d'un agent dispersant polycarboxylique polymère B selon l'exemple 1 et
10% en sec/sec total d'un agent stabilisant chélatant choisi dans le groupe comprenant les six agents suivants:
   - l'acide tartrique,
   - le gluconate de sodium,
   - l'acide 1-hydroxy-éthylidène-1,1-diphosphonique ou HEDP,
   - les sels trisodiques de l'acide nitrilotriacétique ou NTA,
   - le sel pentasodique de l'acide amino-tri(méthylène-phosphonique) ou DEQUEST 2006 et
   - le sel tétrasodique de l'acide 2-phosphono-butane-1,2,4-tricarboxylique ou agent C de l'exemple 1.

A titre d'essai comparatif, un des échantillons de béton a été fluidifié à l'aide du seul agent superplastifiant A selon l'exemple 1.

On a donc procédé à huit expériences (le témoin, les expériences correspondant à l'essai des six agents et l'expérience correspondant à l'essai comparatif).

On a procédé aux mesures de slump (norme ASTM C 143-66) et aux résistances à la compression Rc au jeune âge (après 24 heures); on a également calculé le rapport Rc sur Rct correspondant au témoin.

Les résultats enregistrés sont regroupés dans le Tableau IV.

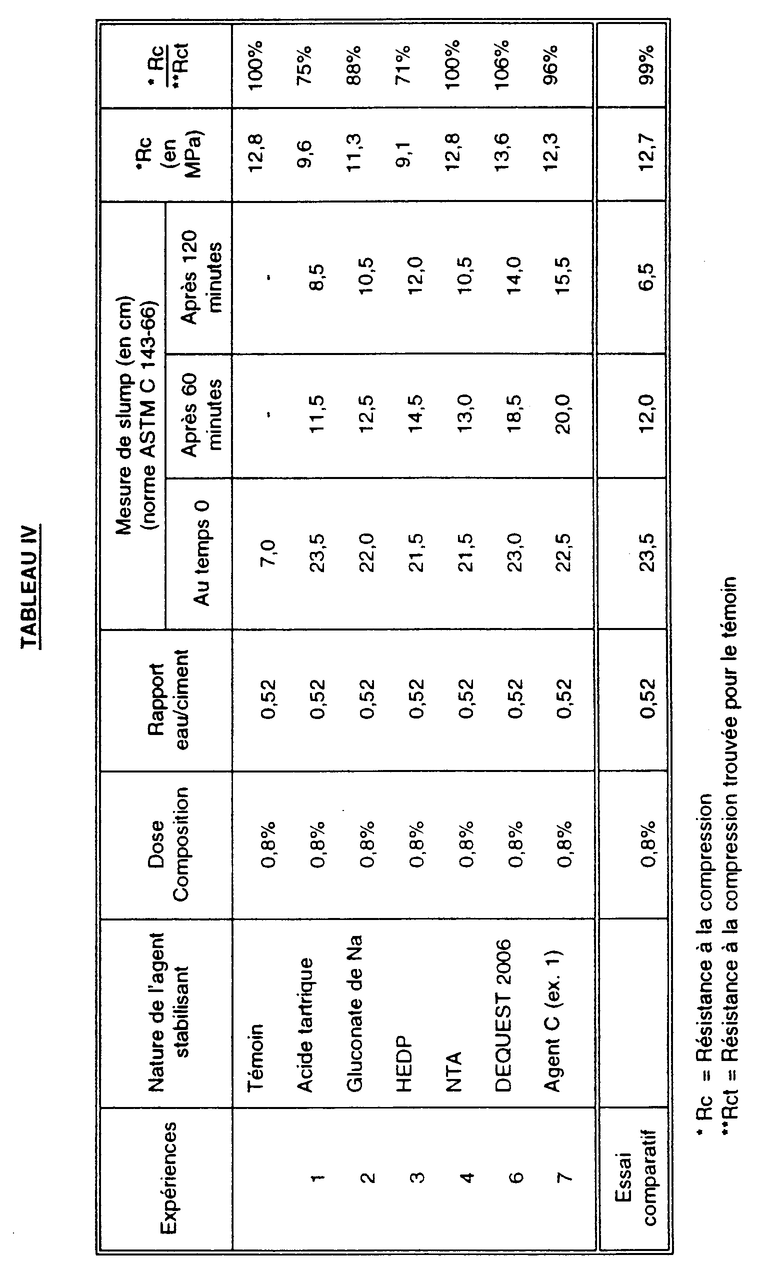

L'examen des résultats réunis dans le Tableau IV montre que les agents stabilisants chélatants comportés par la composition conforme à l'invention, améliorent la fluidification pendant 2 heures après la préparation du béton.

Les acides hydroxycarboxyliques et les acides hydroxyphosphoniques améliorent légèrement la fluidification mais provoquent un retard de prise important, néfaste aux résistances au jeune âge.

Les agents chélatants stabilisants préférés entrant dans la constitution de la composition conforme à l'invention qui comprennent des groupes aminocarboxyliques et/ou aminophosphoniques, améliorent de façon étonnante la fluidification dans le temps des bétons sans avoir une influence négative sur leur résistance à la compression au jeune âge.

### EXEMPLE 4

### Etude de l'influence de la nature de l'agent superplastifiant.

On a préparé des échantillons de béton normal plastique selon le protocole décrit à l'exemple 1 et on leur a fait comporter, sauf au témoin, la composition conforme à l'invention, présentée sous forme d'une solution aqueuse à 40% de matière sèche, comprenant:
20% en sec/sec total d'un agent dispersant polycarboxylique polymère B selon l'exemple 1,
10% en sec/sec total d'un agent stabilisant chélatant C selon l'exemple 1 et
70% en sec/sec total d'un agent superplastifiant constitué par l'un de ceux du groupe suivant:
   - agent superplastifiant A selon l'exemple 1, désigné par PNS (1)
   - agent superplastifiant commercialisé par la Société Bozetto sous la désignation "OS 39", désigné par PNS (2)
   - agent superplastifiant commercialisé par la Société Kao Soap sous la désignation "MIGHTY 150", désigné par PNS (3)
   - agent superplastifiant commercialisé par la Société Henkel sous la désignation "LOMARD", désigné par PNS (4)
   - agent superplastifiant commercialisé par la Société Chemie Linz sous la désignation "LIQUIMENT N", désigné par PNS (5)
   - agent superplastifiant commercialisé par la Société SKW sous la désignation "MELMENT PLAST" (mélamine sulfitée), désigné par MSF (1)
   - agent superplastifiant commercialisé par la Société Chryso sous la désignation "RESINE GT" (mélamine modifiée), désigné par MSF (2)
   - agent superplastifiant constitué par un lignosulfonate de sodium et commercialisé par la Société Lavebène, désigné par LNS (1)
   - agent superplastifiant constitué par un lignosulfonate de sodium désucré et commercialisé par la Société Borregard, désigné par LNS (2)
   - agent superplastifiant constitué par une résine de copolymérisat de maléate de sodium et de styrène sulfonate de sodium et commercialisé par La Compagnie Arco Chemical sous la désignation "résine SSMA 3000" désigné par PSS AM (1).

On a procédé à onze essais, l'un avec le témoin et les dix autres en utilisant successivement dans la composition conforme à l'invention les agents superplastifiants indiqués ci-dessus.

Dans les essais 1 à 5, l'agent superplastifiant retenu est de la classe des condensats de formaldéhyde et de naphtalènesulfonate (PNS).

Dans les essais 6 et 7, l'agent superplastifiant retenu est de la classe des mélamines sulfitées (MSF).

Dans les essais 8 et 9, l'agent superplastifiant retenu est de la classe des lignosulfonates (LNS).

Dans l'essai 10, l'agent superplastifiant retenu est de la classe des copolymérisats de polymaléate de sodium et de polystyrène sulfonate de sodium (PSS AM).

Comme dans les exemples précédents, on a mesuré l'affaissement dans le temps du cône d'Abrams ainsi que les résistances à la compression Rc au jeune âge (après 24 heures) des échantillons de béton ainsi constitués; on a également déterminé le rapport Rc/Rct, Rct étant la résistance à la compression du témoin après 24 heures.

On a également procédé à deux essais comparatifs dans lesquels on a utilisé, à la place de la composition conforme à l'invention mise en oeuvre dans les essais 1 à 10, uniquement l'agent superplastifiant, ce dernier étant alors mis en oeuvre en une quantité égale à la quantité de composition mise en oeuvre dans les essais 1 à 10.

Dans ces deux essais comparatifs, on a eu recours respectivement aux produits PNS (1) et MSF (2).

Les résultats sont réunis dans le Tableau V.

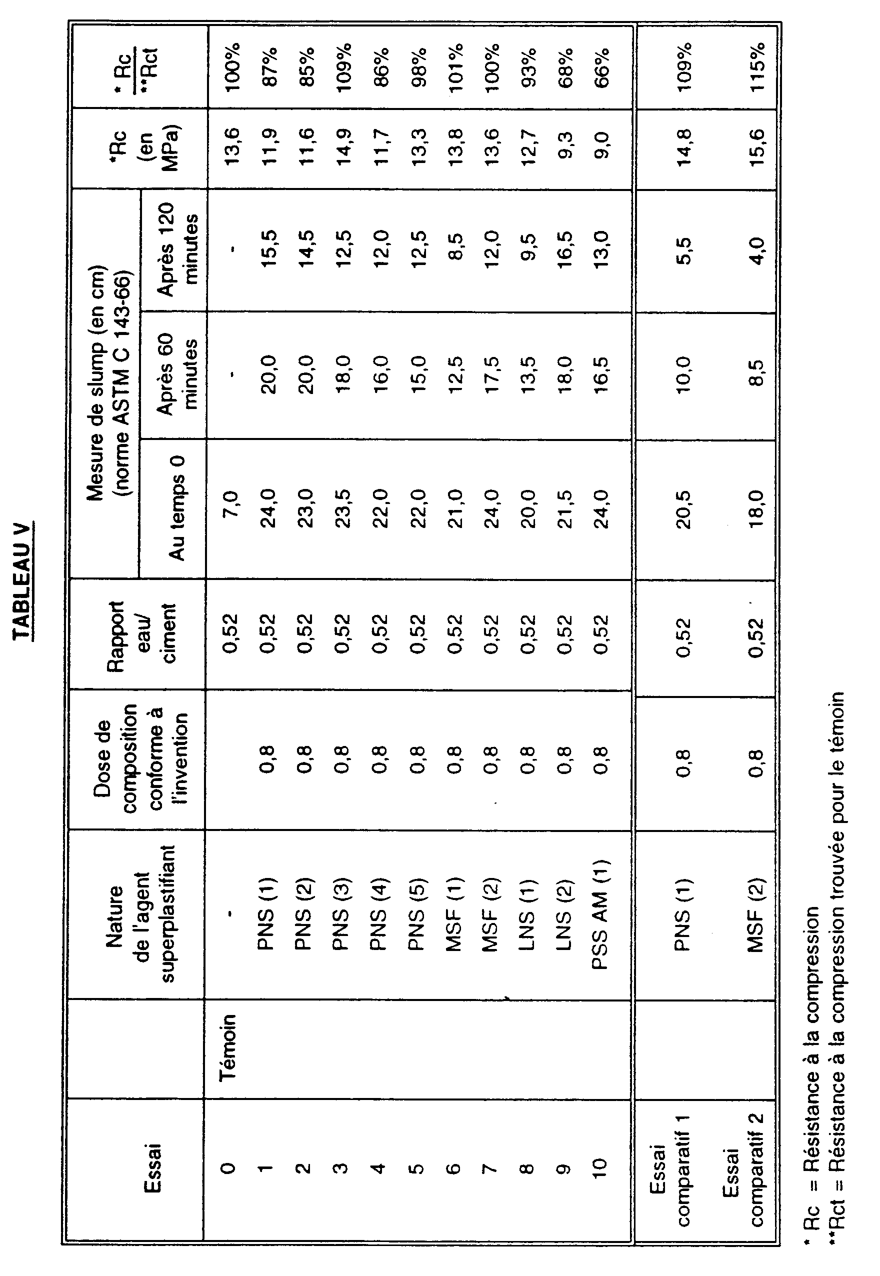

L'examen des résultats réunis dans le Tableau V montre que les bétons comprenant la composition conforme à l'invention, présentent des ouvrabilités qui, 2 heures après la préparation desdits bétons, sont supérieures à celles des bétons comportant des superplastifiants de l'art antérieur.

Les meilleurs résultats sont obtenus avec les agents superplastifiants des types PNS et MSF qui sont préférés.

Les agents superplastifiants des types LNS et PSS AM provoquent un effet retardant la prise qui exerce un effet négatif sur les résistances à la compression au jeune âge; ces agents sont moins avantageux.

La supériorité de la composition conforme à l'invention par rapport à l'agent superplastifiant utilisé seul résulte clairement des deux essais comparatifs.

### EXEMPLE 5

### Etude des proportions des trois constituants dans la composition conforme à l'invention.

On a préparé des échantillons de béton normal plastique selon le protocole décrit à l'exemple 1 et on leur a fait comporter, sauf au témoin, la composition conforme à l'invention, celle-ci comprenant:
- entre 25 et 75% d'un agent superplastifiant constitué par l'agent A selon l'exemple 1,
- entre 0 et 10% d'un agent stabilisant chélatant constitué par l'agent C selon l'exemple 1 et
- entre 20 et 75% d'un agent dispersant polycarboxylique polymère constitué par l'agent B selon l'exemple 1.

Les proportions effectivement retenues pour chacun des susdits constituants de la composition conforme à l'invention apparaissent dans le Tableau VI ci-après.

Dans ce tableau sont donc réunis les résultats obtenus pour la mesure du slump, de la résistance à la compression Rc après 24 heures ainsi que le Rapport Rc/Rct (Rct correspondant au témoin) effectués
- avec le témoin exempt de composition conforme à l'invention,
- avec onze compositions selon l'invention pour lesquelles les proportions des constituants sont indiquées,
- avec deux produits comparatifs (dans l'essai comparatif 1, la composition ne comporte que l'agent B et, dans l'essai comparatif 2, que l'agent A).

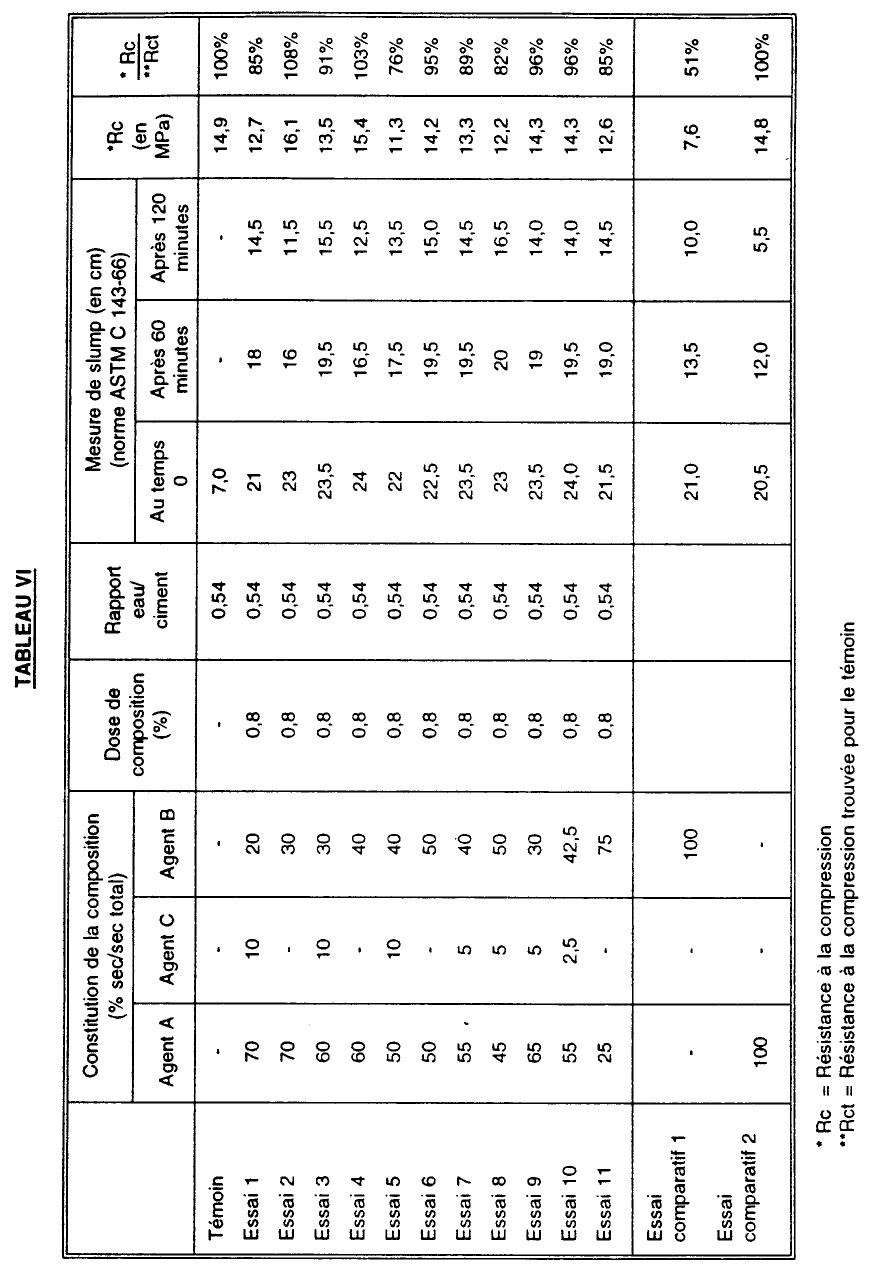

De l'examen des résultats réunis dans le Tableau VI, il apparaît que la composition conforme à l'invention conduit à une ouvrabilité qui, deux heures après la préparation du béton, est suffisante pour le placement et pour le pompage du béton, alors qu'avec les adjuvants selon l'art antérieur (essais comparatifs 1 et 2) la durée d'efficacité est seulement de 45 à 60 minutes après la préparation du béton.

D'autre part, les bétons obtenus avec la composition conforme à l'invention présentent une résistance au jeune âge en accord avec la norme NFP 18 333 établie en rapport avec les superplastifiants.

Enfin, l'essai comparatif 1 montre que la présence du seul agent dispersant polycarboxylique provoque un retard de prise desdits bétons.

### EXEMPLE 6

On a étudié les propriétés de réduction d'eau de la composition conforme à l'invention.

On a préparé un béton et on lui a fait comporter la composition conforme à l'invention et on l'a comparé à un béton exempt de composition préparé avec le même dosage en ciment et avec les mêmes granulats (selon le protocole décrit à l'exemple 3); l'ouvrabilité des deux bétons est la même au temps initial. On a mesuré les affaissements au cours du temps des deux bétons ainsi que leurs résistances à la compression au jeune âge.

On a réuni les résultats dans le Tableau VII.

**TABLEAU VII**

| | | Béton témoin | Béton selon l'invention |
|---|---|---|---|
| Dosage du béton en composition/ciment (en %) | | 0 | 0,8% |
| Rapport eau/ciment | | 0,62 | 0,52 |
| Mesure du slump (en cm) (Norme ASTM C 143-66) | au temps 0 | 18 | 24,0 |
| | après 60 minutes | - | 19,0 |
| | après 120 minutes | - | 11,0 |
| *Rc (en MPa) | | 11,3 | 15,9 |
| *Rc / **Rct | | 100% | 141% |

| | | | |
|---|---|---|---|
| * Rc = Résistance à la compression | | | |
| **Rct = Résistance à la compression trouvée pour le témoin | | | |

L'examen des résultats réunis dans le Tableau VII montre que la présence de la composition conforme à l'invention confère au béton:
- une très haute réduction d'eau pour une maniabilité initiale supérieure ou égale à celle du béton témoin,
- le maintien de cette maniabilité dans le temps et une augmentation des résistances au jeune âge.

La composition conforme à l'invention peut donc être utilisée pour sa fonction de très haut réducteur d'eau dans la fabrication des bétons.

La composition conforme à l'invention peut donc être classée haut réducteur d'eau selon la norme NFP 18 330 qui exige une résistance à la compress'on supérieure ou égale à 140% de celle du témoin, un jour après la préparation.

## Revendications

1. Composition propre à améliorer les propriétés rhéologiques des produits à base de ciments et notamment à augmenter la durée d'ouvrabilité des bétons prêts à l'emploi, caractérisée par le fait qu'elle comprend, sous la forme d'un mélange ternaire,
- un agent superplastifiant ou réducteur d'eau à effet dispersant choisi parmi:
. les condensats de naphtalène-sulfonate et de formol (PNS) sous la forme de sels de métaux alcalins, alcalino-terreux, d'ammonium, d'amines protonées et d'alcanolamines protonées,
. les mélamines sulfitées et les mélamines modifiées, les condensats de mélamine, de dérivés sulficés et de formol sous la forme des sels alcalins et alcalino-terreux,
. les lignosulfonates éventuellement purifiés,
. les sulfonates de polystyrène et les copolymères de polystyrène sulfonés et d'anhydride maléique et
. les mélanges des susdits produits;
- un agent stabilisant susceptible de former un chélate avec les ions calcium du produit à base de ciment choisi parmi:
. les acides hydroxycarboryliques et leurs sels, plus particulièrement ceux du groupe comprenant les acides salicylique, citrique, lactique, gluconique, glucoheptanoïque, tartrique et muconique,
. les aldoses et cétoses, plus particulièrement le saccharose et les sirops de maïs,
. les complexants minéraux, plus particulièrement les phosphates, les borates et les polyphosphates,
. les complexants organiques choisis plus particulièrement dans le groupe comprenant l'EDTA, le NTA,
. les antioxydants, plus particulièrement ceux du groupe comprenant les acides ascorbique et isoascorbique et,
. de préférence, les dérivés de l'acide phosphonique de structure polymère qui contiennent des groupes hydroxy et/ou amino et/ou carboxylates, ainsi qu'un ou plusieurs groupes méthylène phosphonique; et
- un agent dispersant polycarboxylique polymère choisi dans le groupe de produits comprenant les homopolymères et les copolymères hydrosolubles des acides carboxyliques éthyléniques et leurs sels alcalins, ces polymères résultant de la polymérisation ou copolymérisation des acides éthyléniques choisis dans le groupe comprenant les acides acrylique, méthacrylique, fumarique, maléique, itaconique, crotonique, aconitique, sinapique, mésaconique, undécylénique, angélique, hydroxy-acrylique ainsi que l'anhydride maléique.

2. Composition selon la revendication 1, caracterisée par le fait que l'agent stabilisant chélatanr, dans la mesure où il est constitué par un dérivé de l'acide phosphonique de structure polymère et où il contient des groupes hydroxy et/ou amino et/ou carboxylates, et un ou plusieurs groupes méthylène phosphonique, est un composé polymère de formule générale: 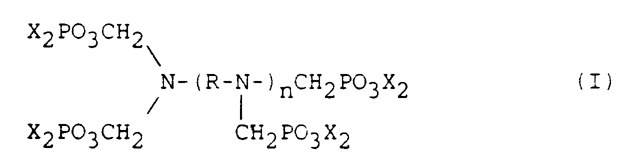 dans laquelle:
- n est un nombre entier de 0 à 10, de préférence de 0 à 4,
- R représente une chaîne carbonée de structure alkylène ou alkylène oxyde de formules:
-(R₁ - O - R₂)-
ou 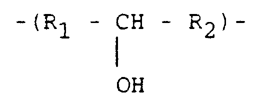 dans lesquelles R₁ et R₂ sont des groupes alkylényles comprenant au moins deux atomes de carbone,
- X représente un atome d'hydrogène, un métal alcalin ou alcalino-terreux, l'ammonium, une amine protonée ou une alcanolamine protonée.

3. Composition selon la revendication 1, caracterisée par le fait que l'agent stabilisant chélatant est choisi parmi ceux du groupe comprenant:
- l'acide aminotri(méthylène-phosphonique) et ses sels,
- l'acide éthylènediamine-tétra(méthylène-phosphonique) et ses sels,
- l'acidediéthylènetriamine-penta(méthylène-phosphonique) et ses sels,
- l'acide hexaméthylènediamine-tétra(méthylène-phosphonique) et ses sels.

4. Composition selon la revendication 1, caracterisée par le fait que l'agent stabilisant chélatant, dans la mesure où il est constitué par un dérivé de l'acide phosphonique de structure polymère et où il contient des groupes hydroxy et/ou amino et/ou carboxylates, et un ou plusieurs groupes méthylène phosphonique, est un polymère obtenu en modifiant des condensats urée-formaldéhyde par addition de formaldéhyde et d'acide orthophosphoreux, ledit polymère étant représenté par la formule générale: 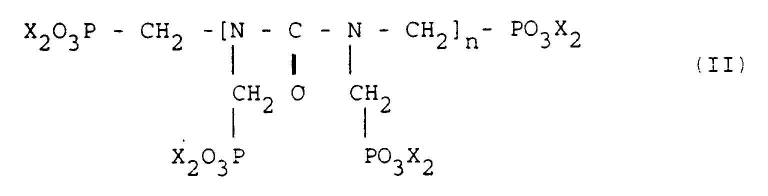 dans laquelle:
- n est un nombre entier égal ou supérieur à 1,
- X représente un atome d'hydrogène, un métal alcalin ou alcalino-terreux, l'ammonium, une amine protonée ou une alcanolamine protonée.

5. Composition selon la revendication 1, caracterisée par le fait que l'agent stabilisant chélatant, dans la mesure où il est constitué par un dérivé de l'acide phosphonique de structure polymère et où il contient des groupes hydroxy et/ou amino et/ou carboxylates, et un ou plusieurs groupes méthylène phosphonique, est un composé gem-hydroxyphosphonique de formule générale: 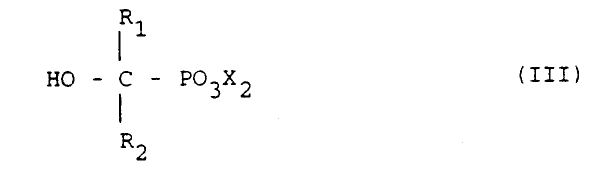 dans laquelle:
- R₁ représente un atome d'hydrogène ou un groupe alkyle,
- R₂ représente un atome d'hydrogène, un groupe alkyle ou le groupe PO₃X₂,
- X représente un atome d'hydrogène, un métal alcalin ou alcalino-terreux, l'ammonium, une amine protonée ou une alcanolamine protonée.

6. Composition selon la revendication 5, caractérisée par le fait que l'agent stabilisant est l'acide 1-hydroxyéthylidène-1,1-diphosphonique et ses sels.

7. Composition selon la revendication 1, caractérisée par le fait que l'agent stabilisant chélatant, dans la mesure où il est constitué par un dérivé de l'acide phosphonique de structure polymère et où il contient des groupes hydroxy et/ou amino et/ou carboxylates et un ou plusieurs groupes méthylène phosphonique, est un composé de formule générale: 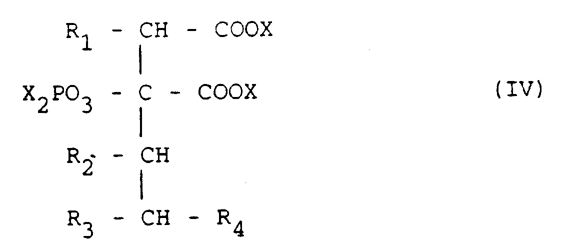 dans laquelle:
- R₁ et R₃ représentent un atome d'hydrogène ou un groupe alkyle comprenant de 1 à 4 atomes de carbone,
- R₂ représente un atome d'hydrogène, un groupe alkyle ou carboxyalkyle,
- R₄ représente un groupe carboxyalkyle, carboxamido ou cyano et
- X représente un atome d'hydrogène, un métal alcalin ou alcalino-terreux, l'ammonium, une amine protonée ou une alcanolamine protonée.

8. Composition selon la revendication 7, caractérisée par le fait que l'agent stabilisant chélatant est choisi dans le groupe comprenant les dérivés d'acide 2-phosphono-butane-1,2-dicarboxylique, plus particulièrement l'acide 2-phosphono-butane-1,2,4-tricarboxylique et ses sels alcalins, alcalino-terreux, d'ammonium, d'amine protonée ou d'alcanolamine protonée.

9. Composition selon la revendication 1, caractérisée par le fait que l'agent dispersant polycarboxylique présente un poids moléculaire moyen de 500 à 15000 en nombre, de préférence de 500 à 10000 en nombre et, plus préférentiellement encore, de 800 à 3500 en nombre, déterminé par chromatographie de perméation de gel (CPG).

10. Composition selon la revendication 1, caractérisée par le fait qu'elle comporte
- de 5 à 95%, de préférence de 50 à 95% en poids d'au moins un agent superplastifiant notamment choisi dans le groupe comprenant les condensats formaldéhyde-naphtalènesulfonate de métaux alcalins ou alcalino-terreux, les lignosulfonates de métaux alcalins ou alcalino-terreux, les mélamines sulfitées, les polystyrènesulfonates de métaux alcalins ou alcalino-terreux et les copolymères styrène-anhydride maléique sous la forme de leurs sels de métaux alcalins ou alcalino-terreux,
- de 0,1 à 50%, de préférence de 0,1 à 25% en poids d'au moins un agent stabilisant chélatant des ions calcium notamment choisi dans le groupe comprenant les acides ou sels de polyalkylène-polyamino(méthylènephosphonique), les condensats urée-formaldéhyde modifiés par addition de groupes méthylènephosphoniques, les composés gemhydroxyphosphoniques et les dérivés de l'acide 2-phosphono-butane-1,2-dicarboxylique, et
- de 5 à 95%, de préférence de 5 à 80% en poids d'un agent dispersant polycarboxylique polymère notamment constitué par un polycarboxylate de métal alcalin.

11. Composition selon la revendication 1, caractérisée par le fait qu'elle comporte
- de 5 à 40% en poids d'un polycarboxylate de métal alcalin,
- de 0,1 à 20% en poids d'un agent stabilisant chélatant du calcium constitué par un acide polyalkylène-polyamino(méthylènephosphonique) ou ses sels ou un dérivé de l'acide 2-phosphono-butane-1,2-dicarboxylique et, plus particulièrement, l'acide 2-phosphono-butane-1,2,4-tricarboxylique et ses sels,
le complément à 100% en poids de la composition étant constitué par un agent superplastifiant, de préférence un condensat de formaldéhyde-naphtalènesulfonate de métal alcalin.

12. Produits à base de ciments caractérisés par le fait qu'ils comportent une quantité efficace de la composition selon l'une des revendications 1 à 11.

13. Produits à base de ciments caractérisés par le fait qu'ils comportent une proportion de 0,1 à 1,0% en poids de matière sèche par rapport au ciment de la composition selon l'une des revendications 1 à 11.

14. Procédé propre à améliorer les propriétés rhéologiques des produits à base de ciments et notamment à augmenter la durée d'ouvrabilité des bétons prêts à l'emploi, caractérisé par le fait que l'on fait comporter auxdits produits une quantité efficace, avantageusement de 0,1 à 1,0% en poids, de matière sèche par rapport au ciment
- soit de la composition selon l'une des revendications 1 à 11,
- soit des constituants de ladite composition, lesdits constituants étant alors incorporés auxdits produits à base de ciments en des proportions relatives correspondant à celles qui sont les leurs dans ladite composition.

## Claims

1. Composition adapted to improve the rheological properties of cement-based products and especially to increase the duration of the workability of concrete ready to use, characterized by the fact that it comprises, in the form of a ternary mixture,
- a superplasticizing or water-reducing agent having a dispersing effect selected from:
. naphthalenesulphonate and formaldehyde condensates (PNS) in the form of salts of alkali metals, alkaline-earth metals, ammonium, protonated amines and protonated alkanolamines,
. sulphite-containing melamines and modified melamines, condensates of melamine, of sulphite-containing derivatives and of formaldehyde in the form of salts of alkali metals and alkaline-earth metals,
. optionally purified lignosulphonates,
. polystyrenesulphonates and copolymers of sulphonated polystyrene and of maleic anhydride and
. mixtures of the abovesaid products;
- a stabilizing agent capable of forming a chelate with the calcium ions of the cement-based product selected from:
. hydroxycarboxylic acids and their salts, more particularly those of the group comprising salicylic, citric, lactic, gluconic, glucoheptanoic, tartaric and muconic acids,
. aldoses and ketoses, more particularly sucrose and maize syrups,
. inorganic complexing agents, more particularly phosphates, borates and polyphosphates,
. organic complexing agents selected more particularly from the group comprising EDTA, NTA,
. antioxidizing agents, more particularly those from the group comprising ascorbic and isoascorbic acids and,
. preferably, derivatives of phosphonic acid of polymer structure which contain hydroxyl and/or amino and/or carboxylate groups, as well as one or several methylenephosphonic groups; and
- a polycarboxylic polymer dispersing agent selected from the group of products comprising hydrosoluble homopolymers and copolymers of ethylenic carboxylic acids and their alkaline salts, these polymers resulting from the polymerization or copolymerization of ethylenic acids selected from the group comprising acrylic, methacrylic, fumaric, maleic, itaconic, crotonic, aconitic, sinapic, mesaconic, undecylenic, angelic and hydroxyacrylic acids as well as maleic anhydride.

2. Composition according to Claim 1, characterized by the fact that the chelating stabilizing agent, insofar as it consists of a phosphonic acid derivative of polymer structure and insofar as it contains hydroxyl and/or amino and/or carboxylate groups, and one or several methylenephosphonic groups, is a polymer compound of general formula: 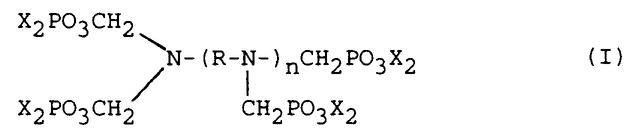 in which:
- n is an integer from 0 to 10, preferably from 0 to 4,
- R represents a carbon chain of alkylene or alkylene oxide structure of formulae:
-(R₁ - O - R₂)-
or 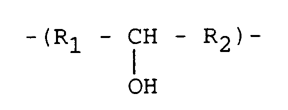
in which
- R₁ and R₂ are alkylenyl groups comprising at least two carbon atoms,
- X represents a hydrogen atom, an alkali metal or alkaline-earth metal, the ammonium, a protonated amine or a protonated alkanolamine.

3. Composition according to Claim 1, characterized by the fact that the chelating stabilizing agent is selected from those of the group comprising:
- aminotri(methylenephosphonic) acid and its salts,
- ethylenediamine-tetra(methylenephosphonic) acid and its salts,
- diethylenetriamine-penta(methylenephosphonic) acid and its salts,
- hexamethylenediamine-tetra(methylene-phosphonic) acid and its salts.

4. Composition according to Claim 1, characterized by the fact that the chelating stabilizing agent, insofar as it consists of a phosphonic acid derivative of polymer structure and insofar as it contains hydroxyl and/or amino and/or carboxylate groups and one or several methylenephosphonic groups, is a polymer obtained by modifying ureaformaldehyde condensates by addition of formaldehyde and orthophosphorous acid, the said polymer being represented by the general formula: 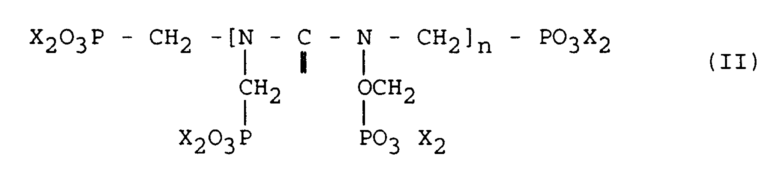 in which:
- n is an integer equal to or greater than 1,
- X represents a hydrogen atom, an alkali metal or alkaline-earth metal, the ammonium, a protonated amine or a protonated alkanolamine.

5. Composition according to Claim 1, characterized by the fact that the chelating stabilizing agent, insofar as it consists of a phosphonic acid derivative of polymer structure and insofar as it contains hydroxyl and/or amino and/or carboxylate groups and one or several methylenephosphonic groups, is a gem-hydroxyphosphonic compound of general formula: 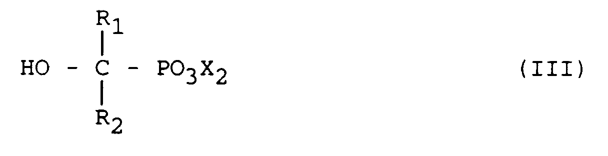 in which:
- R₁ represents a hydrogen atom or an alkyl group,
- R₂ represents a hydrogen atom, an alkyl group or the PO₃X₂ group,
- X represents a hydrogen atom, an alkali metal or alkaline-earth metal, the ammonium, a protonated amine or a protonated alkanolamine.

6. Composition according to Claim 5, characterized by the fact that the stabilizing agent is 1-hydroxyethylidene-1,1-diphosphonic acid and its salts.

7. Composition according to Claim 1, characterized by the fact that the chelating stabilizing agent, insofar as it consists of a phosphonic acid derivative of polymer structure and insofar as it contains hydroxyl and/or amino and/or carboxylate groups and one or several methylenephosphonic groups, is a compound of general formula: 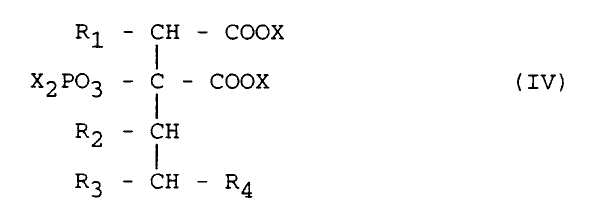 in which:
- R₁ and R₃ represent a hydrogen atom or an alkyl group comprising from 1 to 4 carbon atoms,
- R₂ represents a hydrogen atom, an alkyl or carboxyalkyl group,
- R₄ represents a carboxyalkyl, carboxamido or cyano group and
- X represents a hydrogen atom, an alkali metal or alkaline-earth metal, the ammonium, a protonated amine or a protonated alkanolamine.

8. Composition according to Claim 7, characterized by the fact that the chelating stabilizing agent is selected from the group comprising derivatives of 2-phosphonobutane-1,2-dicarboxylic acid, more particularly 2-phosphonobutane-1,2,4-tricarboxylic acid and its alkali metal, alkaline-earth metal, ammonium, protonated amine or protonated alkanolamine salts.

9. Composition according to Claim 1, characterized by the fact that the polycarboxylic dispersing agent has an average molecular weight in number from 500 to 15,000, preferably from 500 to 10,000 and, more preferably still, from 800 to 3500, determined by gel permeation chromatography (GPC).

10. Composition according to Claim 1, characterized by the fact that it contains
- from 5 to 95%, preferably from 50 to 90%, by weight of at least one superplasticizing agent especially selected from the group comprising alkali metal or alkaline-earth metal formaldehyde-naphthalenesulphonate condensates, alkali metal or alkaline-earth metal lignosulphonates, sulphite-containing melamines, alkali metal or alkaline-earth metal polystyrenesulphonates and styrene-maleic anhydride copolymers in the form of their alkali metal or alkaline-earth metal salts,
- from 0.1 to 50%, preferably from 0.1 to 25%, by weight of at least one stabilizing agent which chelates calcium ions especially selected from the group comprising polyalkylenepolyamino(methylenephosphonic) acids or salts, urea-formaldehyde condensates modified by addition of methylenephosphonic groups, gem-hydroxyphosphonic compounds and derivatives of 2-phosphonobutane-1,2-dicarboxylic acid, and
- from 5 to 95%, preferably from 5 to 80%, by weight of a polycarboxylic polymer dispersing agent especially consisting of an alkali metal polycarboxylate.

11. Composition according to Claim 1, characterized by the fact that it contains
- from 5 to 40% by weight of an alkali metal polycarboxylate,
- from 0.1 to 20% by weight of a calcium-chelating stabilizing agent consisting of a polyalkylenepolyamino(methylenephosphonic) acid or its salts or a derivative of 2-phosphonobutane-1,2-dicarboxylic acid and, more particularly, 2-phosphonobutane-1,2,4-tricarboxylic acid and its salts,
the complement to 100% by weight of the composition consisting of a superplasticizing agent, preferably an alkali metal formaldehyde-naphthalenesulphonate condensate.

12. Cement-based products, characterized by the fact that they contain an effective amount of the composition according to one of Claims 1 to 11.

13. Cement-based products, characterized by the fact that they contain a proportion from 0.1 to 1.0% by weight of dry matter with respect to the cement of the composition according to one of Claims 1 to 11.

14. Process adapted to improve the rheological properties of cement-based products and more especially to increase the duration of the workability of concrete ready to use, characterized in that the said products are made to contain an effective amount, advantageously from 0.1 to 1.0% by weight of dry matter with respect to the cement
- either of the composition according to one of Claims 1 to 11,
- or of the constituents of the said composition, the said constituents then being incorporated in the said cement-based products in relative proportions corresponding to those which they have in the said composition.

## Patentansprüche

1. Zusammensetzung, geeignet die rheologischen Eigenschaften von Produkten auf Zementbasis zu verbessern und insbesondere die Verarbeitbarkeitsdauer gebrauchsfertiger Betone zu erhöhen, dadurch gekennzeichnet, daß sie in Form eines ternären Gemisches umfaßt,
- ein superplastifizierendes oder Wasser-reduzierendes Mittel mit dispergierender Wirkung, ausgewählt aus:
• Kondensaten von Naphtalinsulfonat und Formol (PNS) in Form der Salze mit Alkalimetallen, Erdalkalimetallen, Ammonium, protonierten Aminen und protonierten Alkanolaminen,
• sulfitierten Melaminen und modifizierten Melaminen, Kondensaten von Melamin, sulfitierten Derivaten und Formol in Form der Alkali- und Erdalkalisalze,
• ggf. gereinigten Lignosulfonaten,
• Polystyrolsulfonaten und Copolymeren von sulfoniertem Polystyrol und Maleinsäureanhydrid, und
• Gemischen der vorstehenden Substanzen;
- ein Stabilisierungsmittel, welches fähig ist mit den Calziumionen des Produkts auf Zementbasis ein Chelat zu bilden, ausgewählt aus:
• Hydroxycarbonsäuren und deren Salzen, insbesondere denen aus der Gruppe umfassend Salicyl-, Zitronen-, Milch-, Glucon-, Glucoheptan-, Wein- und Mukonsäure,
• Aldosen und Ketosen, insbesondere Saccharose und Maissirups,
• mineralischen Komplexbildnern, insbesondere Phosphaten, Boraten und Polyphosphaten,
• organischen Komplexbildnern, insbesondere ausgewählt aus aus der Gruppe umfassend EDTA, NTA,
• Antioxidantien, insbesondere aus denen der Gruppe umfassend Ascorbinsäure und Isoascorbinsäure, und
• bevorzugt, Phosphonsäurederivaten mit polymerer Struktur, welche Hydroxy- und/oder Amino- und/oder Carboxylatgruppen sowie eine oder mehrere Methylenphosphongruppen enthalten; und
- ein polymeres Polycarboxyl-Dispergiermittel, ausgewählt aus der Gruppe von Substanzen, umfassend die wasserlöslichen Homopolymere und Copolymere ethylenischer Carbonsäuren und deren Alkalisalze, wobei diese Polymere hervorgehen aus der Polymerisation oder Copolymerisation ethylenischer Säuren, ausgewählt aus der Gruppe umfassend Acryl-, Methacryl-, Fumar-, Malein-, Itakon-, Croton-, Akonit-, Sinapin-, Mesacon-, Undecen-, Angelica-, Hydroxyacrylsäure sowie Maleinsäureanhydrid.

2. Zusammensetzung nach Anspruch 1, dadurch gekennzeichnet, daß das chelatbildende Stabilisierungsmittel, soweit es aus einem Phosphonsäurederivat mit polymerer Struktur besteht und es Hydroxy- und/oder Amino- und/oder Carboxylatgruppen und eine oder mehrere Methylenphosphongruppen enthält, eine polymere Verbindung der allgemeinen Formel: 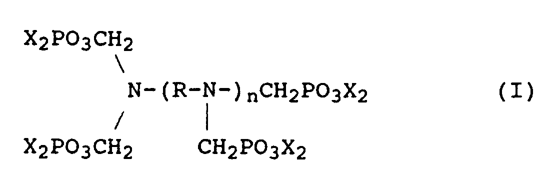 ist, wobei:
- n eine ganze Zahl zwischen 0 und 10 , bevorzugt zwischen 0 und 4 ist,
- R ein kohlenstoffhaltige Kette mit Alkylen- oder Alkylenoxidstruktur der Formeln:
-(R₁ - O - R₂)-
oder 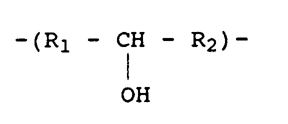 ist, wobei R₁ und R₂ Alkylengruppen sind, welche mindestens zwei Kohlenstoffatome umfassen,
- X ein Wasserstoffatom, ein Alkali- oder Eradalkalimetall, Ammonium, ein protoniertes Amin oder ein protoniertes Alkanolamin darstellt.

3. Zusammensetzung nach Anspruch 1, dadurch gekennzeichnet, daß das chelatbildende Stabilisierungsmittel ausgewählt ist aus denen der Gruppe, umfassend:
- Aminotri(methylenphosphon)säure und deren Salze,
- Ethylendiamintetra(methylenphosphon)säure und deren Salze,
- Diethylentriaminpenta(methylenphosphon)säure und deren Salze,
- Hexamethylendiamintetra(methylenphosphon)säure und deren Salze.

4. Zusammensetzung nach Anspruch 1, dadurch gekennzeichnet, daß das chelatbildende Stabilisierungsmittel, soweit es aus einem Phosphonsäurederivat mit polymerer Struktur besteht und es Hydroxy- und/oder Amino- und/oder Carboxylatgruppen und eine oder mehrere Methylenphosphongruppen enthält, ein Polymer ist, welches erhalten wurde durch Modifikation von Harnstoff-Formaldehyd Kondensaten mittels Zugabe von Formaldehyd und orthophosphoriger Säure, wobei das Polymer durch die allgemeine Formel: 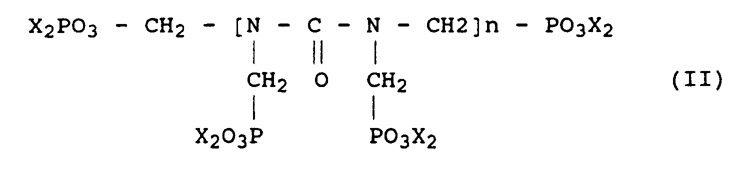 dargestellt ist, wobei:
- n eine ganze Zahl gleich oder größer 1 ist,
- X ein Wasserstoffatom, ein Alkali- oder Eradalkalimetall, Ammonium, ein protoniertes Amin oder ein protoniertes Alkanolamin darstellt.

5. Zusammensetzung nach Anspruch 1, dadurch gekennzeichnet, daß das chelatbildende Stabilisierungsmittel, soweit es aus einem Phosphonsäurederivat mit polymerer Struktur besteht und es Hydroxy- und/oder Amino- und/oder Carboxylatgruppen und eine oder mehrere Methylenphosphongruppen enthält, eine gem-Hydroxyphosphonverbindung der allgemeinen Formel: 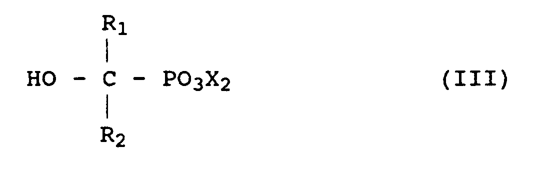 ist, wobei:
- R₁ ein Wasserstoffatom oder eine Alkylgruppe darstellt,
- R₂ ein Wasserstoffatom, eine Alkylgruppe oder die PO₃X₂ Gruppe darstellt,
- X ein Wasserstoffatom, ein Alkali- oder Eradalkalimetall, Ammonium, ein protoniertes Amin oder ein protoniertes Alkanolamin darstellt.

6. Zusammensetzung nach Anspruch 5, dadurch gekennzeichnet, daß das Stabilisierungsmittel 1-Hydroxyethyliden-1,1-diphosphonsäure und deren Salze ist.

7. Zusammensetzung nach Anspruch 1, dadurch gekennzeichnet, daß das chelatbildende Stabilisierungsmittel, soweit es aus einem Phosphonsäurederivat mit polymerer Struktur besteht und es Hydroxy- und/oder Amino- und/oder Carboxylatgruppen und eine oder mehrere Methylenphosphongruppen enthält, eine Verbindung der allgemeinen Formel: 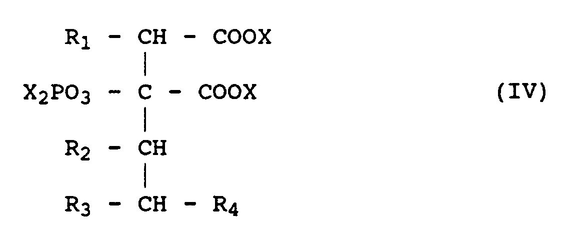 ist, wobei:
- R₁ und R₃ ein Wasserstoffatom oder eine 1 bis 4 Kohlenstoffatome enthaltende Alkylgruppe darstellen,
- R₂ ein Wasserstoffatom, eine Alkyl- oder Carboxyalkylgruppe darstellt,
- R₄ eine Carboxyalkyl-, Carboxamido- oder Cyanogruppe darstellt, und
- X ein Wasserstoffatom, ein Alkali- oder Eradalkalimetall, Ammonium, ein protoniertes Amin oder ein protoniertes Alkanolamin darstellt.

8. Zusammensetzung nach Anspruch 7, dadurch gekennzeichnet, daß das chelatbildende Stabilisierungsmittel ausgewählt ist aus der Gruppe, umfassend die Derivate von 2-Phosphonobutan-1,2-dicarbonsäure, insbesondere 2-Phosphonobutan-1,2,4-tricarbonsäure und deren Alkali-, Eradalkali-, Ammoniumsalze, Salze mit protoniertem Amin oder protoniertem Alkanolamin.

9. Zusammensetzung nach Anspruch 1, dadurch gekennzeichnet, daß das polymere Polycarboxyl-Dispergiermittel bei Bestimmung durch Gelpermeationschromatographie (CPG) ein Molekulargewicht im Zahlenmittel von 500 bis 15000, bevorzugt von 500 bis 10000 im Zahlenmittel, noch stärker bevorzugt von 850 bis 3500 im Zahlenmittel aufweist.

10. Zusammensetzung nach Anspruch 1, dadurch gekennzeichnet, daß sie umfaßt:
- von 5 bis 95 Gew.-%, bevorzugt von 50 bis 95 Gew.-% mindestens eines superplastifizierenden Mittels, insbesondere ausgewählt aus der Gruppe, umfassend Kondensate von Formaldehyd- Alkali- oder Erdalkalimetall-Naphtalinsulfonat, Lignosulfonate von Alkali- oder Erdalkalimetallen, sulfitierte Melamine, Polystyrolsulfonate von Alkali- oder Erdalkalimetallen und Styrol-Maleinsäureanhydrid Copolymere in Form derer Alkali- oder Erdalkalimetallsalze,
- von 0,1 bis 50 Gew.-%, bevorzugt von 0,1 bis 25 Gew.-% mindestens eines Calziumionen komplexierenden Stabilisierungsmittels, insbesondere ausgewählt aus der Gruppe, umfassend
Polyalkylenpolyamino(methylenphosphon)säuren oder -salze, durch Addition von Methylenphosphongruppen modifizierte Harnstoff-Formaldehyd Kondensate, gem-Hydroxyphosphonverbindungen und Derivate von 2-Phosphonobutan-1,2-dicarbonsäure, und
- von 5 bis 95 Gew.-%, bevorzugt von 5 bis 80 Gew.-% eines polymeren Polycarboxyl-Dispergiermittels, das insbesondere aus einem Alkalimetallpolycarboxylat besteht.

11. Zusammensetzung nach Anspruch 1, dadurch gekennzeichnet, daß sie umfaßt:
- von 5 bis 40 Gew.-% eines Alkalimetallpolycarboxylats,
- von 0,1 bis 20 Gew.-% mindestens eines Calzium komplexierenden Stabilisierungsmittels, welches aus einer Polyalkylenpolyamino(methylenphosphon)säure oder deren Salzen oder einem Derivat von 2-Phosphonobutan-1,2-dicarbonsäure und insbesondere 2-Phosphonobutan-1,2,4-tricarbonsäure und deren Salzen besteht,
wobei der Rest der Zusammensetzung ad 100 Gew.-% aus einem superplastifizierenden Mittel, bevorzugt einem Kondensat von Formaldehyd- Alkalimetall-Naphtalinsulfonat besteht.

12. Produkte auf Zementbasis, dadurch gekennzeichnet, daß sie eine wirksame Menge der Zusammensetzung nach einem der Ansprüche 1 bis 11 umfassen.

13. Produkte auf Zementbasis, dadurch gekennzeichnet, daß sie einen Trockengewichtsanteil von 0,1 bis 1,0 % bezogen auf Zement der Zusammensetzung nach einem der Ansprüche 1 bis 11 umfassen.

14. Verfahren, geeignet die rheologischen Eigenschaften von Produkten auf Zementbasis zu verbessern und insbesondere die Verarbeitbarkeitsdauer gebrauchsfertiger Betone zu erhohen, dadurch gekennzeichnet, daß man den Produkten eine wirksame Menge, vorzugsweise von 0,1 bis 1,0 % Trockengewicht bezogen auf Zement
- entweder der Zusammensetzung nach einem der Ansprüche 1 bis 11 zusetzt,
- oder von Bestandteilen der Zusammensetzung zusetzt, wobei die Bestandteile zu den Produkten auf Zementbasis in relativen Anteilen zugegeben werden, die denjenigen in der Zusammensetzung entsprechen.
